# EUROPEAN PATENT APPLICATION

(11) **EP 1 689 009 A1**
(43) Date of publication of application: **09.08.2006**
(21) Application number: 05002388.6
(22) Date of filing: 04.02.2005
(51) Int. Cl.: H01M 2/20

(54) **Battery pack**

(71) Applicant: Yao, Li-ho, Taipei (TW)
(72) Inventor: Yao, Li-ho, Taipei (TW)
(74) Representative: Casalonga, Axel

(57) **Abstract**

A battery pack includes multiple power bus lines (12,13) connecting a plurality battery strings (20) in parallel, wherein each battery string (20) has multiple batteries (11) connected in series. The battery pack further has multiple conductors (30) providing electrical communication between the battery strings (20) such that a battery (11) in one battery string (20) is connected in parallel with a battery (11) in other battery strings (20).

## Description

### 1. Field of the invention

The invention relates to a battery pack, and more particularly to a battery pack experiencing large charge/recharge currents, wherein the battery pack is composed of multiple batteries connected in a grid configuration capable of efficiently supplying power and reducing the weight of the whole battery pack.

### 2. Related Art

Electrical power sources have been proposed for powering movement of vehicles in recent years. Because the vehicles require larger large power, the power source can be formed by a single high-power battery or a collection of multiple large batteries. However, if a battery pack that is composed the large batteries with bulky size and heavy weight, it will become a relative huge load for the vehicle.

Moreover, difficulties associated with manufacturing the high-capacity battery will make the battery impractical for use in powering vehicles. A problem should be seriously concerned is the safety of the battery. As the size of the battery enlarges, the possibility of incurring an explosion accordingly increases.

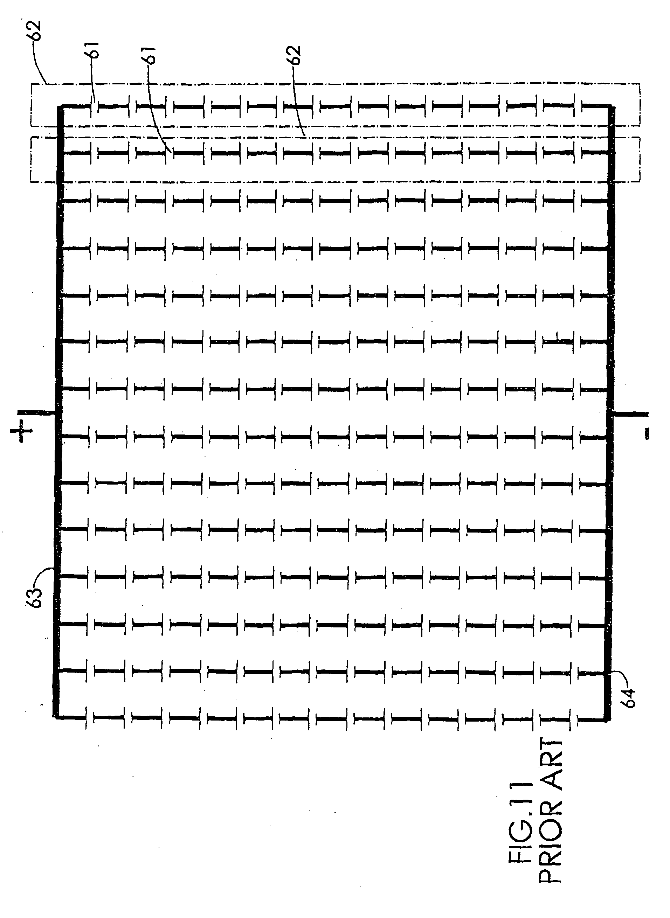

An alternative to the use of the larger batteries is a battery pack that includes multiple small batteries. With reference to Fig. 11, one version of the battery pack connects several battery strings (62) in parallel between two buses (63)(64) where each battery string (62) includes a plurality of batteries (61) connected in series. Electricity is then supplied to loads coupled to the battery pack from the two buses (63)(64). Because the batteries (61) are connected in series, any failure battery (61) in the string (62) can make other batteries in the same string (62) inactive. For other strings (62) still normally operating, they must share the power output capacity originally supplied from the failure string. In other words, the rest of normal batteries (62) must supply higher energy to loads. As a result, the life of the batteries reasonably becomes very short.

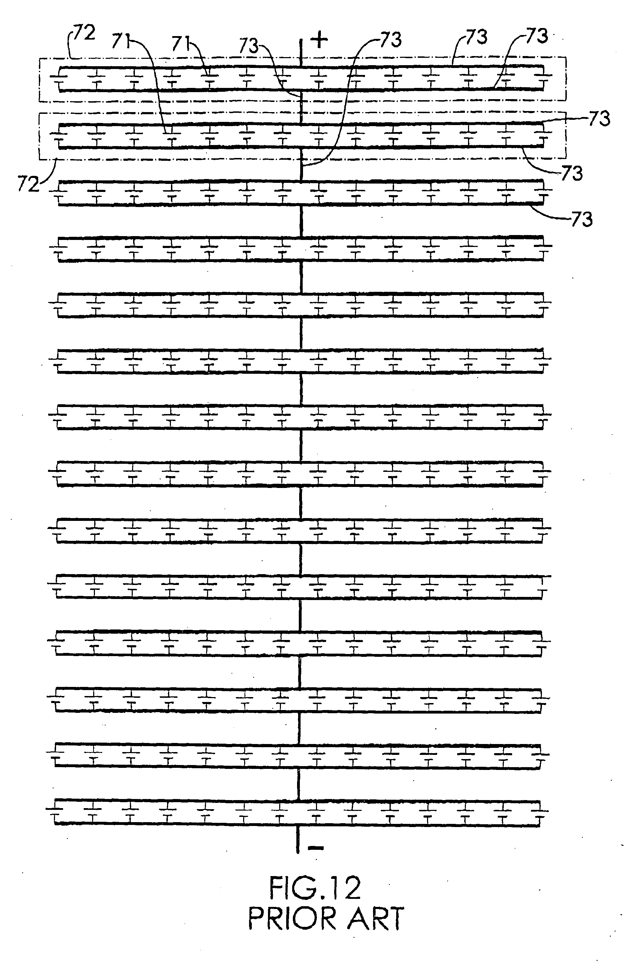

With reference to Fig. 12, another alternative battery pack connects multiple battery groups (72) in series where each of the batteries (71) are connected in parallel between two buses (73)(74).

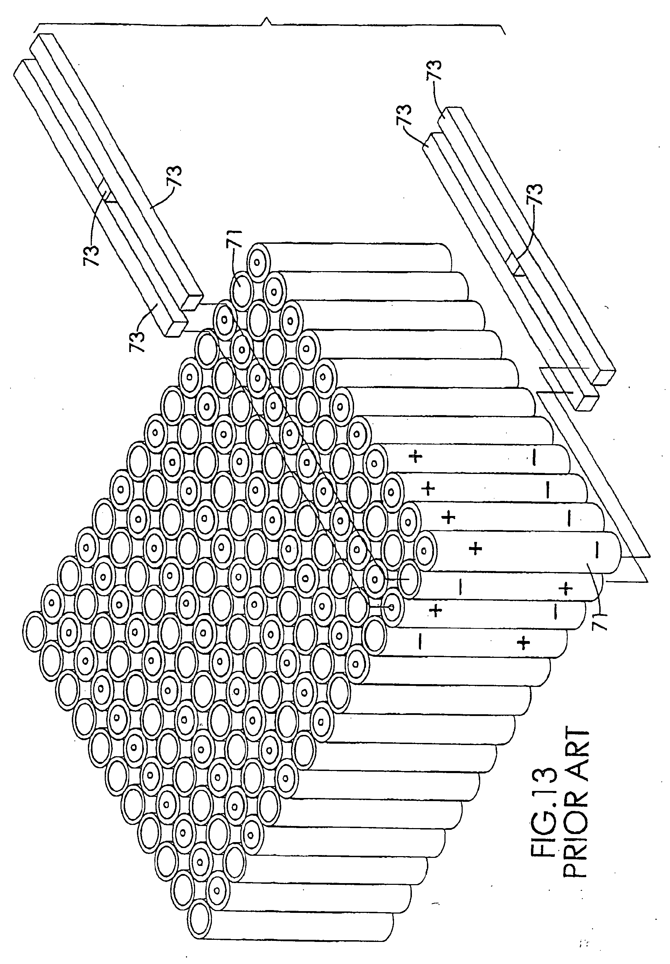

With reference to Fig. 13, to accomplish the parallel configuration of Fig. 12, large conductors (71) are necessary in the battery pack to be used in the vehicle. A pair of the conductors (73) are connected to batteries (71) in parallel thus forming a battery group (72) to carry large current provided by the battery pack. According to the polarity denominated on the batteries (71), the polarity arrangements of two adjacent battery groups (72) is just opposite to each other so the adjacent battery groups (72)must be further connected in series.

Based on the foregoing architecture, even when one of the batteries (71) becomes failure, the other batteries (71) in the same group (72) still have normal operation. However, as the current level to be provided by the battery pack increases, the size of the conductors (73) must be increased accordingly. The current requirements needed to power a vehicle cause the conductors (73) to be undesirably large and heavy. The large size of the conductors (73) also causes the connections of the conductors (73) and the batteries (71) to be very difficult and impractical.

For the above reasons, there is a need for a novel battery pack that is suitable for use in powering vehicles.

A battery pack includes power bus lines connecting multiple battery strings in parallel, wherein each battery string comprises multiple batteries connected in series; and multiple conductors providing electrical communication between the battery strings such that a battery in one battery string is connected in parallel with a battery in other battery strings.

Further advantages, features and details of the present invention will be elucidated on the basis of the following description of a preferred embodiment thereof, with reference to the annexed figure showing a circuit diagram thereof.

### In the drawings:

Fig. 1 is a schematic diagram of a battery pack in accordance with the present invention.
Fig. 2 illustrates an exploded perspective view showing an embodiment of the batter pack of Fig. 1 being held in a case.
Fig. 3 is a perspective view of the battery pack being held in the case.
Fig. 4 illustrates an embodiment of a battery pack having electrical connections in accordance with Fig. 1.
Fig. 5 illustrates a perspective view of the bottom of battery pack shown in Fig. 4.
Fig. 6 illustrates a perspective view of a connector.
Fig. 7 illustrates a side plan view of the connector of Fig. 6.
Fig. 8 illustrates another embodiment of a battery pack having electrical connections in accordance with Fig. 1.
Fig. 9 illustrates the bottom of the battery pack of Fig. 8.
Fig. 10 illustrates yet another embodiment of a battery pack having electrical connections in accordance with Fig. 1.
Fig. 11 is a schematic diagram of a conventional battery pack.
Fig. 12 is a schematic diagram of another conventional battery pack.
Fig. 13 illustrates an embodiment of a battery pack in accordance with Fig. 12.

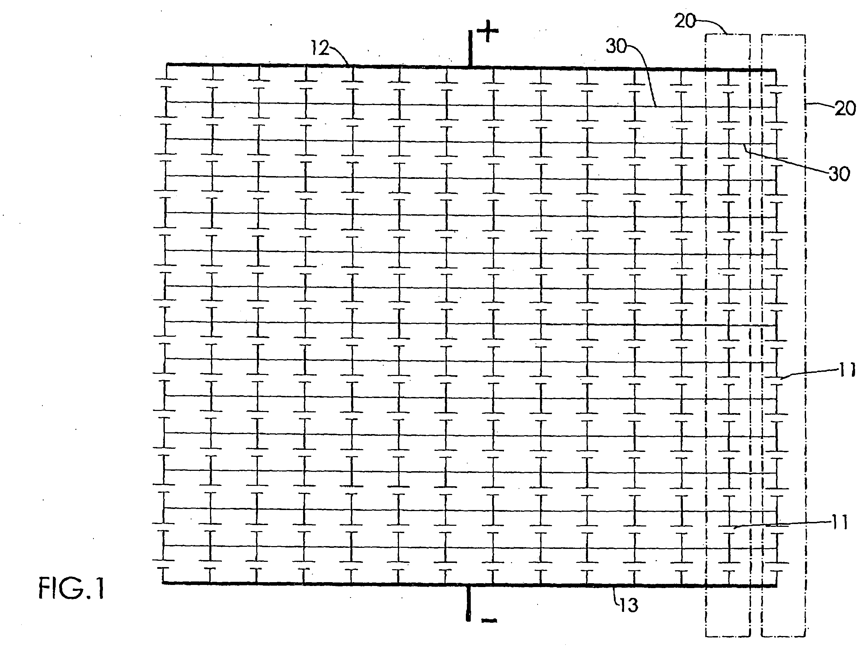

With reference to Fig. 1, a battery pack in accordance with the present invention employs a grid configuration having a combination of series and parallel connections, where the battery pack comprises a plurality of battery strings (20) connected in parallel between power bus lines (12)(13). Each battery string (20) includes multiple batteries (11) connected in series. The battery pack further has multiple conductors (30) connected to the battery strings (20). Each conductor (30) provides an electrical connection between adjacent battery strings (20) such that a battery (11) in one of the battery strings (20) is connected in parallel with a battery (11) in another battery string (20). It is noted that since the bus lines (12)(13) carry the current of the whole battery pack, the power bus lines (12)(13) have ability to sustain the maximum current generated by the battery pack.

For purpose of explanation, the batteries (11) in the same string (20) are connected in series by multiple lines as shown in Fig. 1.These lines are named as "series wires" hereinafter. The lines providing electrical communication between series wires in adjacent battery strings (20) are denominated as "parallel wires" hereinafter.

During discharge of the battery pack, current can flow from a battery (11) through a series wire or a parallel wire. However, it is noted that the series wires carry the primary current flow. Since there is no large current flow passing through the parallel wires under normal operating conditions, these parallel wires need not to be as larger or heavy as prior buses. Therefore, these parallel wires allow the size and weight of the battery pack of the present invention to be greatly reduced.

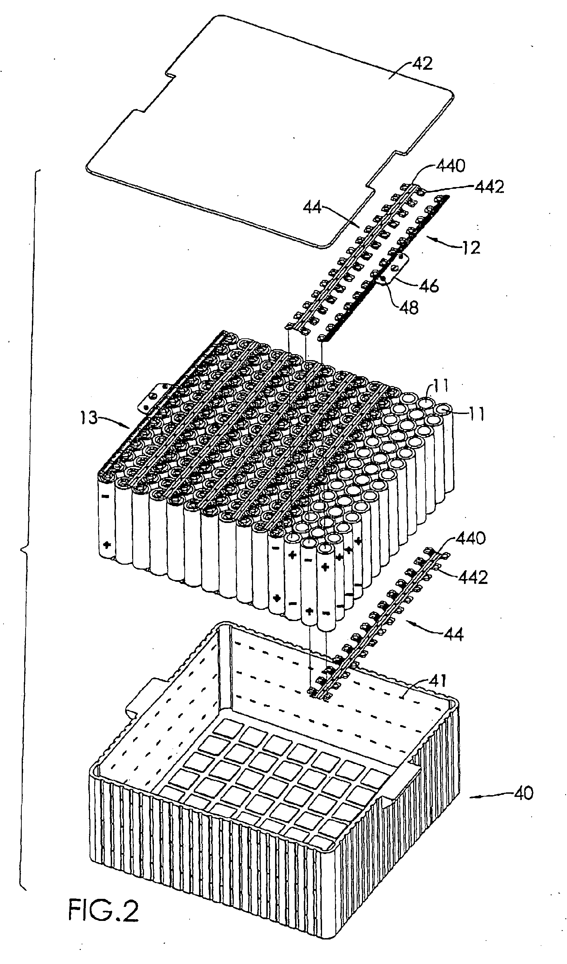

With reference to Fig. 2, the battery pack of the present invention can be held inside a case (40), where a cover (42) is attached on the case (40). As shown in the drawing, two bus sheets serve as the power bus lines (12)(13). Each bus sheet is formed by multiple tabs extending from one side of a plate body. Each tab on the conductive sheet electrically contacts to a terminal of an outmost battery (11) of the battery pack.

Each of the batteries (11) has a terminal at one end and another terminal at the other end. These terminals of the batteries (11) can be connected to form the grid configuration as shown in Fig. 1 by the conductors (30) and the bus sheets. In the embodiment, multiple conductive plates (44) are used as the conductors (30) in the battery pack and also serve as the series wires as well as parallel wires mentioned above. The structure of the conductive plates (44) and its electrical connection to the batteries (11) will be described later in detail.

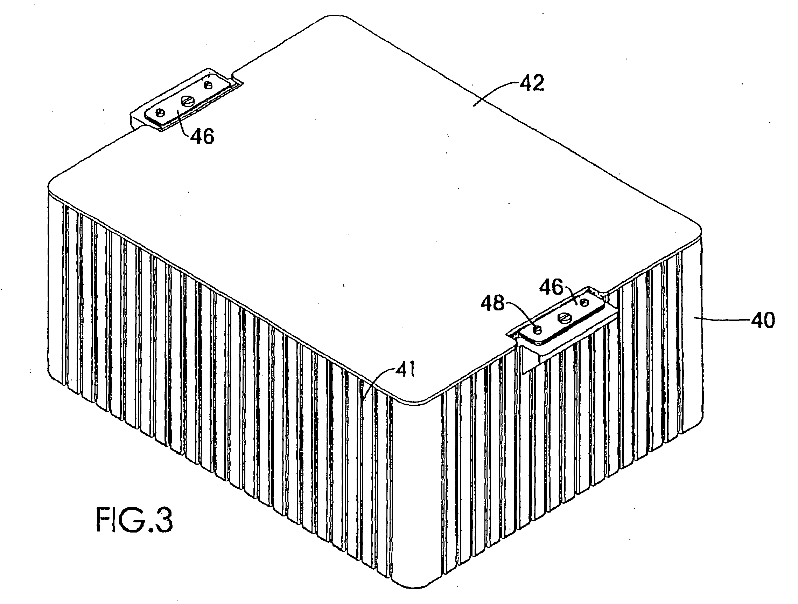

With reference to Fig. 3, the case (40) can further include a plurality of holes (41) defined through walls of the case (40). Each hole (41) is preferably formed as an inclined shape with two openings, where the inner opening is lower than the outer opening. These through holes (41) allow heat generated by the battery pack to be dissipated. The inclined design also prevents water from entering the case (40) so as to protect the batteries (11).

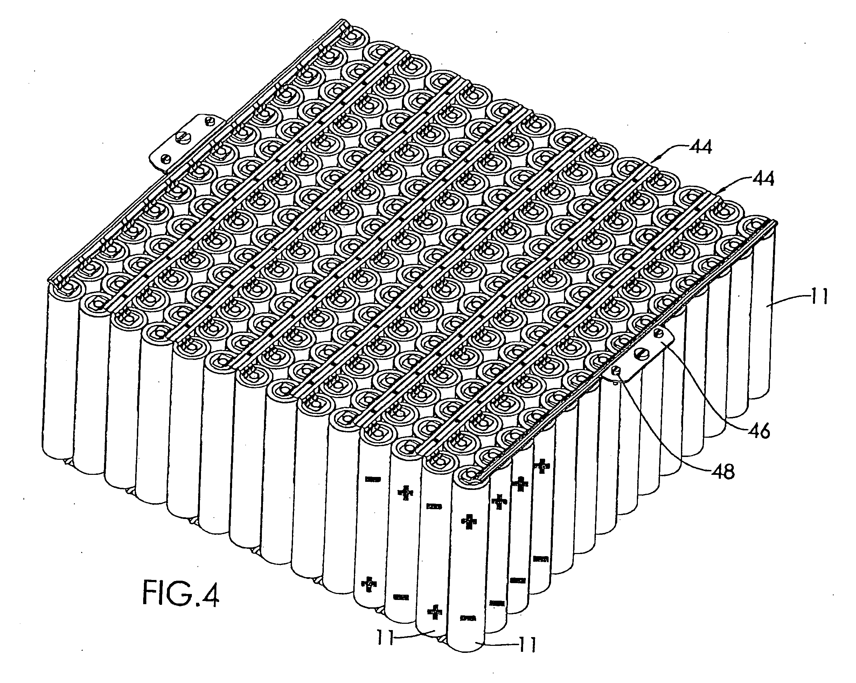

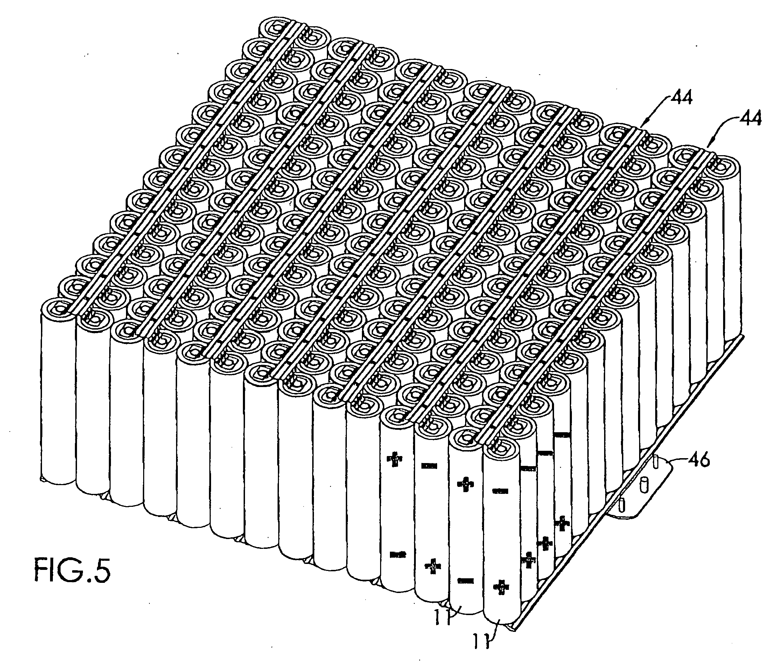

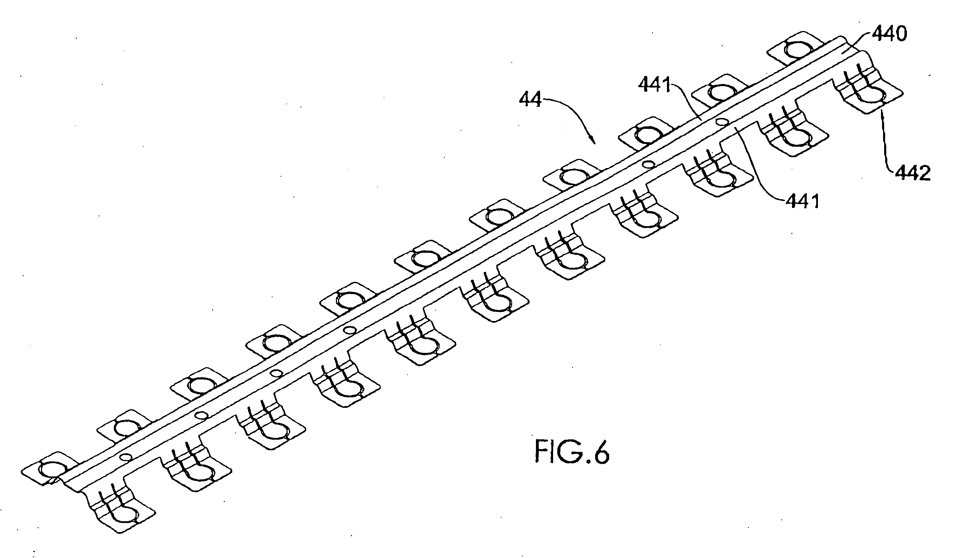

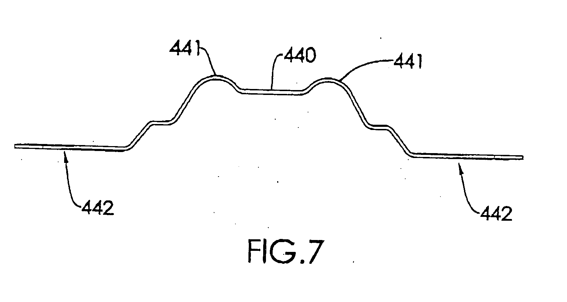

With reference to Figs. 4 to 6, each of the conductive plate (44) includes multiple tabs (442) connecting to a longitudinal body (440). In the embodiment, the multiple tabs (442) are symmetrically extended from opposite sides of the longitudinal body (440). With reference to Fig. 7, the conductive plate (44) has an arch that extends from a tab (442) on one side of the body (440) to a tab (442) on the other side. The body (440) has a top surface on which protruding ribs (441) form. The arch shape permits the conductive plate (44) to absorb vertical pressure experienced by the battery pack without disruption because the body (440) will slightly deform. Suitable materials for the conductive plates (44) include, but not limited to, a metal plate with nickel surfaces, a clad (a copper plate with nickel surfaces) or other materials. Nickel can offer advantages of high corrosion resistance, high conductive and cheap low cost.

An alternative embodiment of the conductive plate (44) can include multiple tabs (442) integrally extending only from one side of the body (440). Another alternative embodiment of the conductive plate (44) can have multiple unsymmetrical tabs (442) integrally extending from opposite sides of the body (440). However, another suitable method of constructing the conductive plate (44) connects the tabs (442) to the body (440).

Each tab (442) is formed by a rectangular piece defined with a U-shaped slot and a notch communicating with the slot thus separating the piece into three contacts. These contacts can be individually soldered on a terminal of one end of the battery (11). When the battery pack experiences horizontal movements, the left and the right contacts are able to absorb the stress so that the middle U-shaped contact can still be securely mounted on the battery.

As noted above, the currents conducted through the parallel wires are lower than that conducted through the series wires. As a result, the bus sheets (12a)(13a) have larger cross sectional areas than the conductive plates (44). Each bus sheet (12a)(13a) further has a platform (46) with terminals (48) mounted thereon. The terminals (48) can be constructed from a metals structure and attached on the platform (46) by any known fastening techniques. In this embodiment, the platform (46) as well as terminals (48) extend through the case (40) to permit access from the outside of the case.

The tab (442) of the conductive plates (44) employed in the present invention provides a suitable area to easily achieve an electrical contact with a battery. Therefore, the quality of the connection between the conductive plates (44) and the batteries (11) can be ensured. The batteries (11) employed in the present invention can preferably be small rechargeable secondary batteries. Moreover, a shortest distance measured from the center of the secondary battery to an edge of the secondary battery is in the range of 0.5 to 3.5 centimeters. In some instances, the batteries can be the lithium ion batteries, lithium polymer batteries, Ni-MH batteries or fuel cells. The battery pack is formed by a cell array at least having 4_4 number of batteries, where the battery pack is still able to supply enough power.

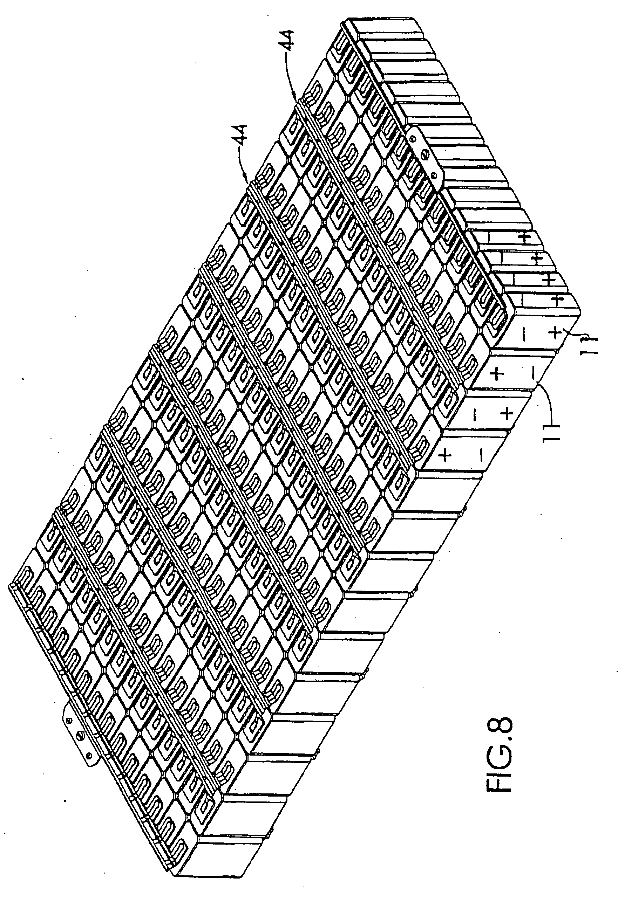

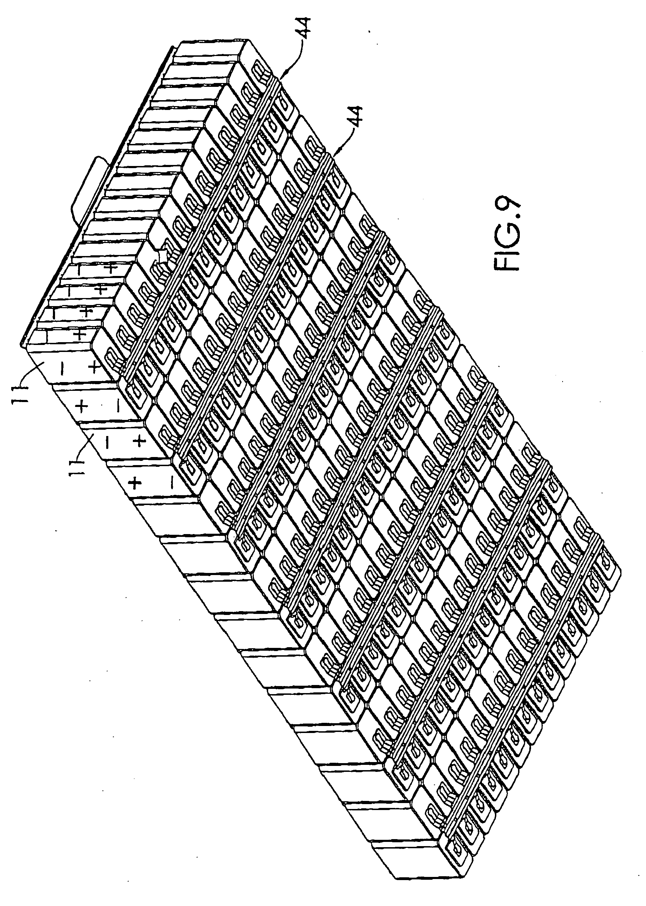

Except the cylindrical batteries, an alternative embodiment of the batteries is illustrated in Figs. 8 and 9. The batteries with rectangular shape can be the lithium ion batteries. It is noted that the polarity of such rectangular batteries is different from the cylindrical types. An end with a protruding represents a negative terminal, and the other flat end means a positive terminal. The rectangular batteries are still suitable to be connected into the grid configuration as shown in Fig. 1 by the conductive plates (44).

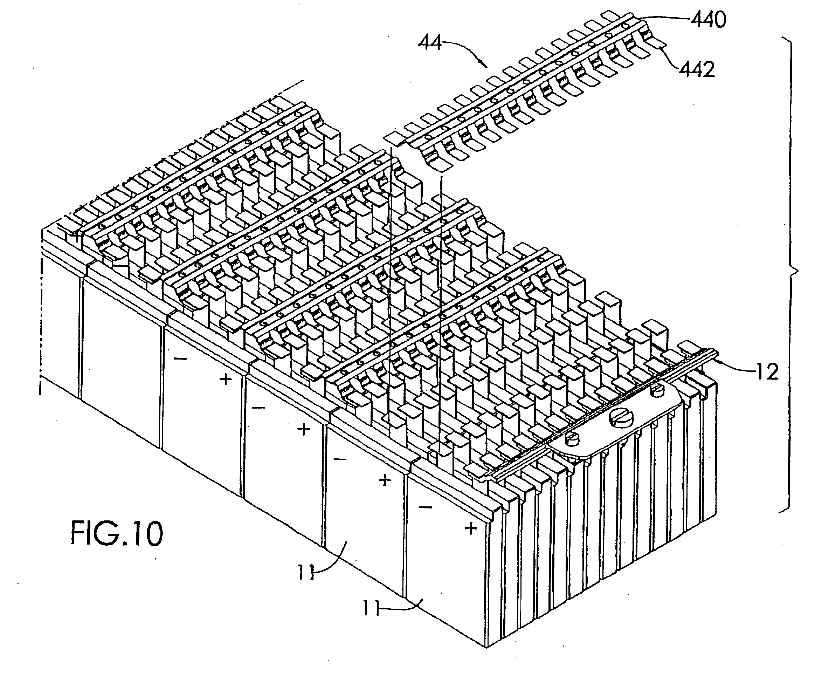

With reference to Fig. 10, another type of rectangular battery extends a positive terminal and a negative terminal from the same end. For instances, the lithium polymer battery or the advance lithium ion battery (laminated lithium ion battery) has such a structure. The positive terminals and the negative terminals of the batteries are alternately arranged and then electrically connected by the conductive plates (44).

When comparing the present invention with prior arts, the present invention has a great advantage in the aspect of power density. For example, the typical power density is limited to 700W/kg. For example, the battery pack employed in the notebook computers is about 600W/kg or less. However, as the weight of the whole battery pack reduces, the power density offered by the battery pack in accordance with the present invention can be higher than 1000W/kg.

The present invention is not however limited to the above described preferred embodiment thereof; the rights sought are defined by the following claims, within the scope of which many modifications can be envisaged.

## Claims

1. A battery pack comprising:
power bus lines (12,13) connecting multiple battery strings (20) in parallel, wherein each battery string (20) comprises multiple batteries (11) connected in series; and
multiple conductors (30) providing electrical communication between the battery strings (20) such that a battery (11) in one battery string (20) is connected in parallel with a battery (11) in other battery strings (20).

2. The battery pack as claimed in claim 1, wherein each of the multiple batteries (11) is a rechargeable secondary battery.

3. The battery pack as claimed in claim 2, wherein the secondary batteries (11) are lithium ion batteries.

4. The battery pack as claimed in claim 2, wherein the secondary batteries (11) are lithium polymer batteries.

5. The battery pack as claimed in claim 2, wherein the secondary batteries (11) are Ni-MH batteries.

6. The battery pack as claimed in claim 2, wherein the secondary batteries (11) are fuel cells.

7. The battery pack as claimed in claim 1, wherein a shortest distance measured from a center of the battery (11) to an edge of the battery (11) is in the range of 0.5 to 3.5 centimeters, and the battery pack comprises more than four battery strings (20), and each of the battery strings (20) comprises more than four batteries (11) connected in series.

8. The battery pack as claimed in claim 1, wherein each of the multiple conductors is a conductive plate (44).

9. The battery pack as claimed in claim 8, wherein the conductive plate (44) is a nickel plate.

10. The battery pack as claimed in claim 8, wherein the conductive plate (44) is a metal plate formed with nickel surfaces.

11. The battery pack as claimed in claim 8, wherein the conductive plate (44) is a copper plate formed with nickel surfaces.

12. The battery pack as claimed in claim 8, wherein the conductive plate (44) is formed by multiple tabs (442) connecting to one side of a body (440), each of the tabs (442) electrically connecting to one of the batteries (11).

13. The battery pack as claimed in claim 8, wherein the conductive plate (11) is formed by multiple tabs (442) connecting to two sides of a body (440), each of the tabs (442) electrically connecting to one of the batteries (11).

14. The battery pack as claimed in claim 13, wherein the multiple tabs (442) are symmetrically connecting to the two sides of the body.

15. The battery pack as claimed in claim 13, wherein the multiple tabs (442) are connecting to the two sides of the body (440) in an unsymmetrical configuration.

16. The battery pack as claimed in claim 12, wherein the conductive plate (44) has an arch that extends from a tab (442) on one side of the body (440) to a tab (442) on the other side of the body (440), where ribs (441) are formed on the body (440)

17. The battery pack as claimed in claim 13, wherein the conductive plate (44) has an arch that extends from a tab (442) on one side of the body (440) to a tab (442) on the other side of the body (440), where ribs (441) are formed on the body (440).

18. The battery pack as claimed in claim 16, wherein each of the tabs (442) is separated into more than two contacts.

19. The battery pack as claimed in claim 17, wherein each of the tabs (442) is separated into more than two contacts.

20. The battery pack as claimed in claim 1, wherein the battery pack is further held by a case (40) and a cover (42) is attached to the case (40), wherein a plurality of through holes (41) is defined at walls forming the case (40).

21. The battery pack as claimed in claim 8, wherein two of the multiple conductive plates (44) electrically connecting to the batteries (11) are used as power bus lines (12,13) to conduct current generated by the battery pack, wherein each of the two power bus lines has a platform (46) on which terminals (48) are formed.
